# EUROPEAN PATENT APPLICATION

(11) **EP 2 276 134 A1**
(43) Date of publication of application: **19.01.2011**
(21) Application number: 08874548.4
(22) Date of filing: 18.12.2008
(51) Int. Cl.: H02G 3/22, B60R 16/02, H01B 17/58

(54) **GROMMET**

(30) Priority: 03.06.2008 JP 2008146300
(71) Applicant: Sumitomo Wiring Systems, Ltd., Yokkaichi-shi Mie 510-8503 (JP)
(72) Inventor: OKUHARA, Takashi, Yokkaichi-shi Mie 510-8503 (JP); SAKATA, Tsutomu, Yokkaichi-shi Mie 510-8503 (JP); UJITA, Satoshi, Yokkaichi-shi Mie 510-8503 (JP)
(74) Representative: Gendron, Vincent Christian
(86) International application number: PCT/JP2008/073059
(87) International publication number: WO 2009/147764

(57) **Abstract**

To provide a grommet of which a vehicle body latch recess is not deformed, thereby maintaining a good sealing function, even if a wire harness that passes the grommet is bent sharply. The grommet includes: an inner tube for passing electrical cables in the wire harness in a close contact manner; an annular coupling section protruding an outer peripheral surface of the inner tube; and an outer tube continued to an outer peripheral surface of the annular coupling section and disposed coaxially with the inner tube. The outer tube is adapted to couple the annular coupling section to a larger thickness portion of the outer tube and to couple a reducing diameter slant wall section to the larger thickness portion. The outer tube is provided on an outer peripheral surface at a boundary area between the larger thickness portion and the slant wall section with a vehicle body latch recess in an annular manner. The annular coupling section is formed into a smaller thickness. The annular coupling section is bent in a V-shaped configuration from an inner peripheral end coupled to the outer peripheral surface of the inner tube to an outer peripheral end coupled to an inner peripheral surface of the outer tube.

## Description

### FIELD OF THE INVENTION

This invention relates to a grommet and more particularly relates to a grommet that is mounted on a wire harness to be wired in a motor vehicle and is attached to a through-hole in a vehicle body panel to protect, waterproof, and dustproof a portion of the wire harness inserted in the through-hole.

### BACKGROUND OF THE INVENTION

Heretofore, a wire harness to be wired from an engine room in a motor vehicle to a passenger room mounts a grommet made of rubber or elastomer, and the grommet is attached to a through-hole provided in a vehicle body panel for partitioning a vehicle body of the motor vehicle into the engine room and the passenger room so as to protect the wire harness passing the through-hole and to waterproof, dustproof, and sound-insulate from an engine room side to a passenger room side.

The present applicant has proposed a grommet shown in Figure 8A and disclosed in JP 2007-135253 A (Patent Document 1). In the grommet, an enlarging diameter tubular section 100 is provided in an outer peripheral surface of an larger diameter side with a vehicle body latch recess 102. Closing surface portions 103A and 103B are provided on an inner peripheral surface of a larger diameter side end of the enlarging diameter tubular section 100. A pair of half cylindrical portions 104A and 104B protrude from opposed central parts of the respective closing surface portions 103A and 103B. A smaller diameter tubular section 105 passes a central part of the enlarging diameter tubular section 100 from a smaller diameter end side of the enlarging diameter section 100. The smaller diameter tubular section 105 protrudes an inner tube 105a in a central area between the pair of half cylindrical portions 104A and 104B.

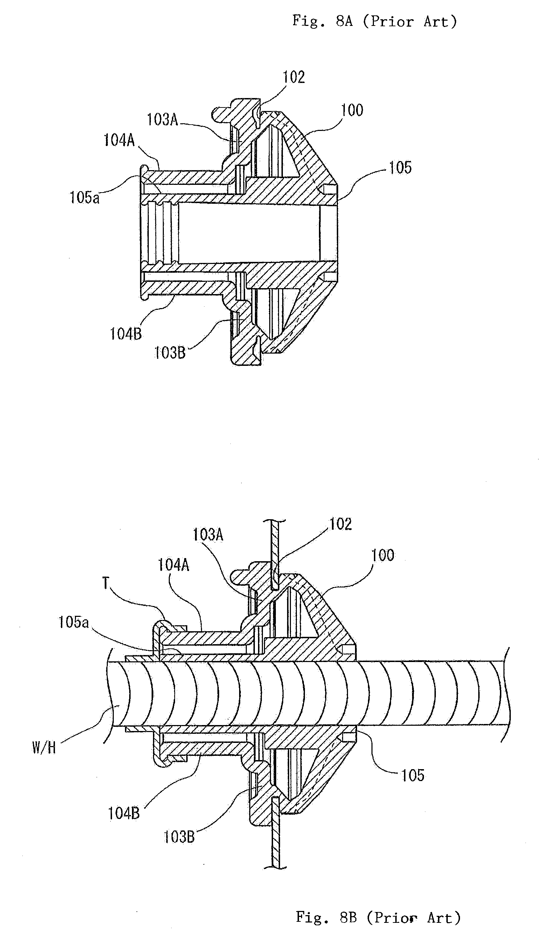

As shown in Figure 8B, in the above grommet, after a wire harness W/H passes through the smaller diameter tubular section 105 that protrudes to the larger diameter side to penetrate the enlarging diameter section 100, a tape T is wound around an outer peripheral surface of the pair of half cylindrical portions 104A and 104B at the outer peripheral side of the inner tube 105a that is provided at a protruding side of the smaller diameter tubular section 105, and also the tape T is wound around an outer peripheral surface of the wire harness W/H drawn out from the inner tube 105a, thereby securing the wire harness W/H to the grommet.

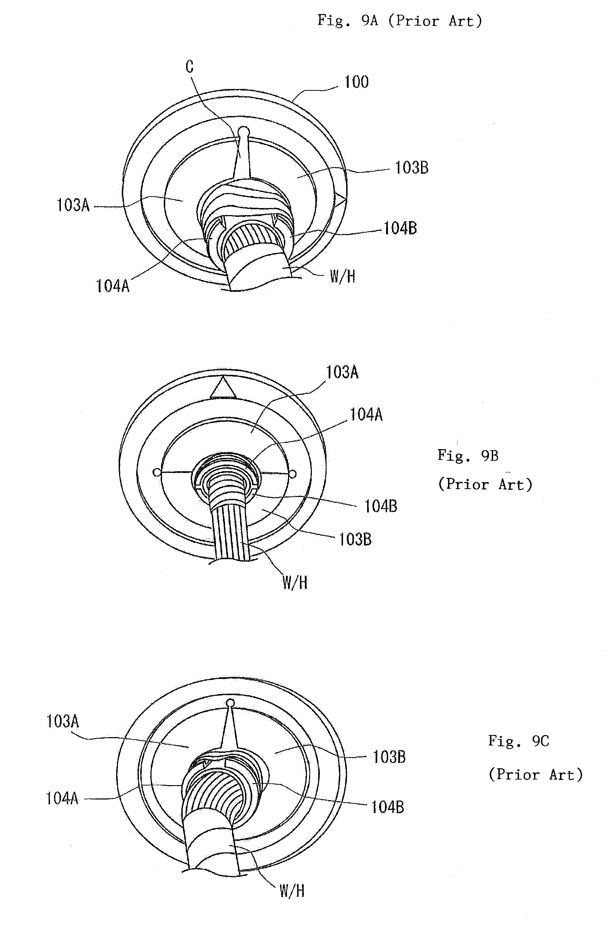

In the grommet disclosed in Patent Document 1, since the smaller diameter tubular section does not protrude outward from the smaller diameter side of the enlarging diameter tubular section 100 but extends from the section 100 to a larger diameter side, there is an advantage that a length of the grommet can be shortened.
However, in the case where the wire harness W/H has a larger diameter, the smaller diameter tubular section 105 spreads its cross section in an ellipse shape and the pair of half cylindrical portions 104A and 104B also spread their cross sections in the ellipse shape with the tape T being wound around the outer peripheries of the portions 104A and 104B. Thus, if the pair of half cylindrical portions 104A and 104B do not keep a perfect circle in cross section, as shown in Figure 9A, the closing surface portions 103A and 103B coupled to proximal ends of the half cylindrical portions 104A and 104B are also pulled, so that a slit between opposed surfaces of the closing surface portions 103A and 103B is widened to cause a clearance C and so that an outside shape of the enlarging diameter tubular section 100 connected to the closing surface portions 103A and 103B is also deformed. In result, the vehicle body latch recess 102 provided in the outer peripheral surface of the enlarging diameter tubular section 100 is deformed in the ellipse shape in cross section, so that the recess 102 cannot contact with the through-hole in the vehicle body panel tightly. Under this condition, there is a possibility that water leakage will happen through the through-hole in the vehicle body panel.

On the other hand, in the case where the wire harness W/H has a smaller diameter, the half cylindrical portions 104A and 104B are contracted, so that the tape T is wound around the portions 104A and 104B in the ellipse shape in cross section, as shown in Figure 9B. This results in a state similar to the state shown in Figure 9A. The vehicle body latch recess 102 is deformed through the closing surface portions 103A and 103B. This will cause a possibility of water leakage.
Further, when the wire harness W/H on which the half cylindrical portions 104A and 104B are wound by the tape T is bent sharply, as shown in Figure 9C, the vehicle body latch recess 102 is deformed through the closing surface portions 103A and 103B, thereby causing the water leakage.

In addition, although the smaller diameter tubular section 105 extends in the enlarging diameter section 100, as disclosed in Paten Document 1, even if the smaller diameter tubular section 105 protrudes outward from the smaller diameter tubular end of the enlarging diameter section 100, the half cylindrical portions 104A and 104B protrude from the closing surface portions 103A and 103B to cover the outer peripheral surface of the wire harness W/H and the tape is wound around them, the above problem will happen.

Patent Document 1: JP 2007-135253 A

### SUMMARY OF THE INVENTION

### PROBLEMS THAT THE INVENTION IS TO SOLVE

In view of the above problems, an object of the present invention is to provide a grommet that can enhance a waterproofing function by preventing a clearance from being caused in a connecting part between a smaller diameter tubular section of the grommet and a wire harness that passes the grommet in a close contact manner, and in particular to provide a grommet that can prevent a clearance from being caused in a connecting part between the grommet and a wire harness and to provide a grommet of which a vehicle body latch recess is not deformed, thereby maintaining a good sealing function, even if a wire harness that passes the grommet is bent sharply.

### MEANS FOR SOLVING THE PROBLEMS

In order to achieve the above object, the present invention is directed to a grommet that is mounted on a wire harness to be inserted into a through-hole in a vehicle body, is engaged with a vehicle body, and is made of an elastic material. The grommet includes: an inner tube for passing electrical cables in the wire harness in a close contact manner; an annular coupling section protruding an outer peripheral surface of the inner tube; and an outer tube continued to an outer peripheral surface of the annular coupling section and disposed coaxially with the inner tube. The outer tube is adapted to couple the annular coupling section to a larger thickness portion of the outer tube and to couple a reducing diameter slant wall section to the larger thickness portion. The outer tube is provided in an outer peripheral surface at a boundary area between the larger thickness portion and the slant wall section with a vehicle body latch recess in an annular manner. The annular coupling section is formed into a smaller thickness. The annular coupling section is bent in a V-shaped configuration from an inner peripheral end coupled to the outer peripheral surface of the inner tube to an outer peripheral end coupled to an inner peripheral surface of the outer tube.

A projecting direction of the V-shaped configuration of the annular coupling section is opposite in direction to an extension of the slant wall section of the outer tube. If the annular coupling section protrudes toward the slant wall section, when the grommet is inserted into the through-hole in the vehicle body panel, the slant wall section is deflected inward and the annular coupling section that protrudes inward interferes with the deflection of the slant wall section. This will affect reduction in inserting force of the grommet.

Preferably, the V-shaped configuration of the annular coupling section is set to be an angle of 40 to 70 (forty to seventy) degrees. A length of the annular coupling section is set to be 1.5 to 4 (one and a half to four) times of a radial distance between an inner peripheral surface of the inner tube and an outer peripheral surface of the outer tube. A thickness of the annular coupling section is set to be less than thicknesses of the inner and outer tubes.
As described above, if the angle of the V-shaped configuration of the annular coupling section is set within the above range, it is possible to increase the length of the annular coupling section. When the inner tube is bent on account of the bending of the wire harness, the annular coupling section can increase an amount of absorbing the bending, so that transmission of the bending to the outer tube is cut off. If the annular coupling section has the smaller thickness, the annular coupling section can exert an absorbing action of the bending easily.

Since the annular coupling section that interconnects the outer tube and the inner tune through which the wire harness passes in the close contact manner is bent into the V-shaped configuration in the grommet of the present invention, the grommet can respond to the varying sizes in diameter of the wire harness merely by altering the bending angle of the annular coupling section, thereby permitting the tape to be wound around the inner tube, with the inner tube closely contacting with the wire harness.
Even if the inner tube is bent on account of the bending of the wire harness, the annular coupling section is contracted or expanded so as to follow the bending of the wire harness and the deformation of the inner tube can be absorbed in the annular coupling section before the bending of the inner tube is transmitted to the outer tube. Accordingly, it is possible to restrain and prevent any load such as a pulling action or a compressing action from affecting the outer tube. In result, it is possible to prevent the vehicle body latch recess provided in the outer peripheral surface of the outer tube from being deformed so as to maintain the recess in the circular shape and to prevent the recess from floating up. Thus, the vehicle body latch recess can contact with the peripheral edge around the through-hole in the vehicle body panel without shifting the recess from the through-hole. This can enhance the sealing effect and prevent the water leakage.

Preferably, in the grommet of the present invention, the annular coupling section protrudes from the outer peripheral surface of a longitudinal intermediate part between a pushing-in side and a drawing-out side of both ends of the inner tube. The larger thickness portion of the outer tube is continued to the outer peripheral end of the annular coupling section. An inner peripheral surface at a smaller diameter end side of the slant wall section of the outer tube is separated through a given clearance from the outer peripheral surface of the inner tube. A drawing-out side of the inner tube protrudes outward from the slant wall section.
The slant wall section may be provided on its smaller diameter end with a drawing-out distal end side tubular portion that extends in parallel to the axial direction of the inner tube and a separated clearance may be defined between the inner peripheral surface of the drawing-out distal end side tubular portion and the outer peripheral surface of the inner tube.

In the above grommet, the inner tube through which the wire harness passes in the close contact manner is separated at the drawing-out side of the wire harness through a great clearance from the outer tube provided with the vehicle body latch recess.
In the separated type grommet, even if the wire harness that is drawn out from the grommet and is arranged in the passenger room is bent sharply by an angle of 90 degrees or so to bend the inner tube, it is possible to prevent the bending of the inner tube from being transmitted to the outer tube directly. Since the inner tube is coupled through the annular coupling section to the outer tube at the longitudinal intermediate part from the drawing-out end side of the inner tube, the deformation of the inner tube can be absorbed in the annular coupling section and the deformation of the inner tube does not affect the vehicle body latch recess provided in the larger diameter end side of the outer tube.

Since the inner tube of the above grommet through which the wire harness passes in the close contact manner is not divided into half cylinders but the inner tube is formed into an integrated cylinder, it is possible for the inner tube to closely contact with the whole outer peripheral surface of the wire harness merely by increasing or decreasing the diameter of the inner tube in accordance with the varying sizes in diameter of the wire harness, thereby enhancing the sealing function of the connecting part between the grommet and the wire harness.

In the separated type grommet, a pushing rib protrudes from the annular coupling section toward an inner surface of the slant wall section. The pushing rib presses the slant wall section to transmit the pushing force to the slant wall.
When the grommet is inserted into the through-hole in the vehicle body panel, a working person holds the wire harness at the pushing-in side of the inner tube and pushes the wire harness into the through-hole. Since the inner tube is connected through the annular coupling section to the outer tube, the pushing force is hardly transmitted to the slant wall section at the drawing-out side of the outer tube. Consequently, the pushing rib is provided on the annular coupling section, the pushing rib presses the inner peripheral surface of the slant wall section at the drawing-out side, and the pushing force is transmitted through the pushing rib to the slant wall section. This can enhance workability in insertion of the grommet. It will be preferable to provide the pushing rib on the whole peripheral surface of the annular coupling section, since the pushing force to be transmitted to the slant wall section is uniformed. Preferably, a thickness of the pushing rib is set to be 2 to 4 (two to four) times of the thickness of the annular coupling section and is set to be larger than the thickness of the slant wall section.

The grommet of the present invention is not limited to the above separated type grommet. A coupled type grommet in which a smaller diameter end of the slant wall section is coupled through an annular coupling portion to the inner tube can be used in the present invention.
In the coupled type grommet, the inner tube is divided into a first inner tube member and a second inner tube member at a grommet drawing-out side and at a grommet pushing-in side. A smaller diameter end of the slant wall section of the outer tube is coupled to the first inner tube member at the drawing-out side. The second inner tube member at the pushing-in side is coupled through the annular coupling section to the outer tube. The annular coupling section is provided with diametrically divided ends. The second inner tube member protrudes from the divided ends. The annular coupling section is bent in a V-shaped manner.

Even if the grommet of the present invention is either the separated type grommet or the coupled type grommet, the stepped longitudinal projecting ribs protrude from the outer peripheral surface of the slant wall section and are separated apart from one another in the peripheral direction, so that the contact area between the slant wall section and the through-hole can be reduced to lower the inserting force. Thus, the grommet can be inserted into the through-hole in the vehicle body panel by the one-motion operation of pushing the grommet from one side, thereby decreasing the inserting force.

### EFFECTS OF THE INVENTION

As described above, according to the grommet of the present invention, the inner tube through which the wire harness passes in the close contact manner is coupled through the annular coupling section having the V-shaped configuration to the outer tube. Thus, even if the wire harness is bent sharply to bend the inner tube, the annular coupling section can absorb the deformation of the inner tube by changing the bending angle of the section and can absorb transmission of the deformation to the outer tube, thereby preventing the vehicle body latch recess from being deformed and floating up, and enhancing a waterproofing function.
The annular coupling section can follow the varying sizes in diameter of the wire harness by changing the angle of V-shaped configuration. Even in this case, the bending of the wire harness cannot affect the outer tube provided with the vehicle body latch recess and the waterproofing function can be obtained.

### BRIEF EXPLANATION OF THE DRAWINGS

[Fig. 1] Figure 1A is a perspective view of a first embodiment of a grommet in accordance with the present invention taken from a drawing-out side. Figure 1B is a perspective view of the grommet of the present invention taken from a pushing-in side.
[Fig. 2] Figure 2 is a plan view of the grommet shown in Figure 1, illustrating the grommet taken from the drawing-out side.
[Fig. 3] Figure 3 is a longitudinal section view of the grommet taken along lines III-III in Figure 2.
[Fig. 4] Figure 4 is a longitudinal section view of the grommet taken along lines IV-IV in Figure 3.
[Fig. 5] Figure 5 is a longitudinal section view of the grommet similar to Figure 3, illustrating the grommet into which a wire harness is inserted and that is attached to a vehicle body.
[Fig. 6] Figure 6A is a schematic side elevation view of the grommet in the case where the wire harness is bent at the drawing-out side of the grommet. Figure 6B is a schematic side elevation view of the grommet in the case where the wire harness is bent at the pushing-in side of the grommet.
[Fig. 7] Figure 7 is a longitudinal section view of a second embodiment of the grommet in accordance with the present invention.
[Fig. 8] Figure 8A is a longitudinal section view of a prior art grommet. Figure 8B is a longitudinal section view of the prior art grommet shown in Figure 8A, illustrating the grommet through which a wire harness passes.
[Fig. 9] Figures 9A to 9C are explanatory views that illustrate problems in the prior art grommet.

### EXPLANATION OF SIGNS

- 1:: grommet
- 2:: vehicle body panel
- 3:: through-hole
- 5:: inner tube
- 6:: annular coupling section
- 8:: outer tube
- 9:: larger thickness portion
- 10:: vehicle body latch recess
- 11:: slant wall section
- 15:: projecting ribs
- 18:: pushing rib

### PREFERRED ASPECTS OF EMBODYING THE INVENTION

Referring now to the drawings, embodiments of a grommet in accordance with the present invention will be described below.

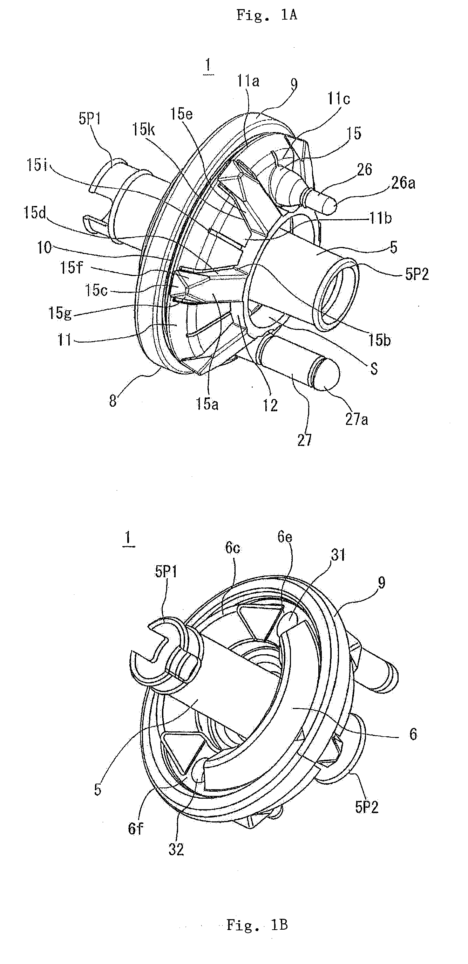

Figure 1A to Figure 6B show a first embodiment of a grommet in accordance with the present invention.

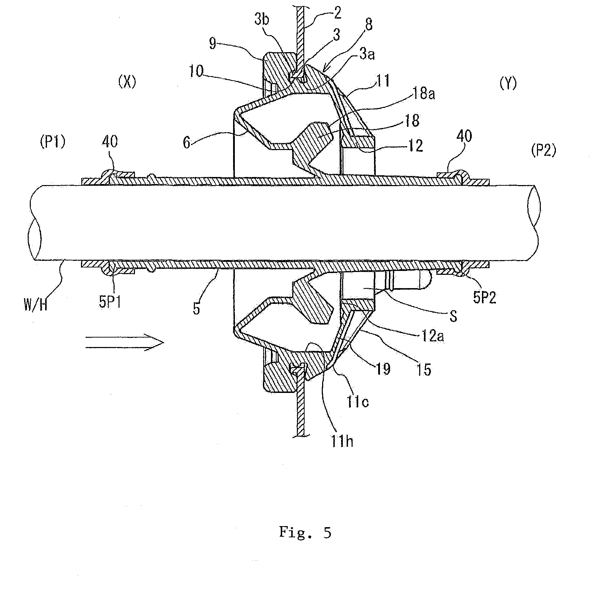

As shown in Figure 5, a grommet 1 is mounted on a wire harness W/H arranged from an engine room X in a motor vehicle via a through-hole 3 in a vehicle body panel 2 to a passenger room Y. The grommet 1 is engaged with a peripheral edge around the through-hole 3 to be attached to the vehicle body. The grommet 1 is a one-motion type grommet that is inserted into the through-hole 3 from an engine room X so as to be attached to the vehicle body. The one end of the grommet 1 defines a pushing-in side P1 while the other end defines a drawing-out side P2. The grommet 1 is molded from rubber or elastomer.

The grommet 1 in the first embodiment is a separated type grommet in which a clearance is defined between a smaller diameter end of a slant wall section and an inner tube.
The grommet 1 includes an inner tube 5 having a smaller diameter and permitting a set of electrical cables in the wire harness W/H to pass in a close contact manner, an annular coupling section 6 that protrudes from an outer peripheral surface 5a on an intermediate part of the inner tube 5 between a pushing-in end 5P1 at the pushing-in side P1 and a drawing-out end 5P2 at the drawing-out side P2 in a longitudinal direction of the inner tube 5, and an outer tube 8 having a larger diameter and continued to an outer peripheral surface of the annular coupling section 6.

The outer tube 8 is coaxial with the inner tube 5 and is disposed through a space on an intermediate part of the inner tube 5 in its longitudinal direction. The inner tube 5 protrudes from opposite ends of the outer tube 8 at the pushing-in side P1 and the drawing-out side P2 in the longitudinal direction.
The outer tube 8 extends to the drawing-out side P2 from a connecting part between the outer tube 8 and an outer peripheral surface of the annular coupling section 6. A slant wall section 11 is continued to a larger thickness portion 9 provided on the connecting part and extends to the drawing-out side P2 to reduce a diameter of the section 11 in the axial direction. An annular vehicle body latch recess 10 is provided in an outer peripheral surface on a boundary area between the larger thickness portion 9 and a larger diameter end of the slant wall section 11. The slant wall section 11 is provided on its smaller diameter end with a drawing-out distal end side tubular portion 12 that extends in parallel to the axial direction of the inner tube 5.

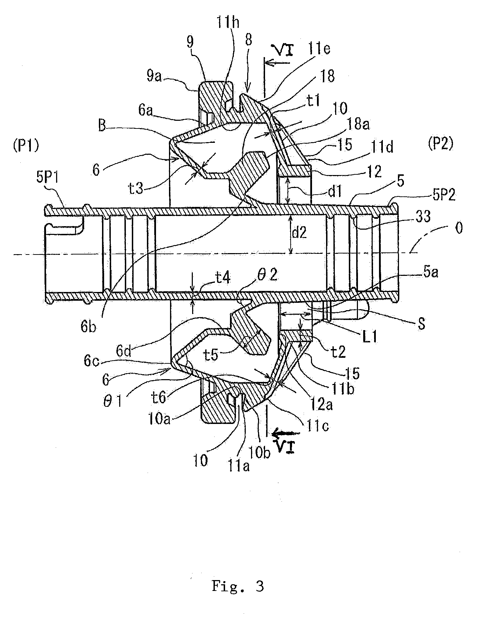

An annular clearance S (Figure 3) is defined between an inner peripheral surface of the drawing-out distal end side tubular portion 12 and the outer peripheral surface 5a of the inner tube 5 to separate the portion 12 apart from the inner tube 5. That is, a smaller diameter end of the outer tube 8 surrounds the outer peripheral surface of the inner tube 5 through the annular clearance S and the drawing-out end 5P2 protrudes outward from the outer tube 8.

As shown in Figure 3, a radial distance d1 of the annular clearance S is set to be 1/2 to 3/2 (one-half to three-halves) of a radius d2 of the inner tube 5. It is preferable in the present embodiment that the radial distance d1 is 3/4 (three quarters) of the radius d2. A length L1 of the drawing-out distal end side tubular portion 12 that extends through the annular clearance S in parallel to the outer peripheral surface 5a of the inner tube 5 may be altered in accordance with a size of the grommet 1. It is preferable in the present embodiment that the length L1 is 5 to 15 mm (five to fifteen millimeters) .

As shown in Figure 1B and Figure 3, the annular coupling section 6 that interconnects the outer tube 8 and inner tube 5 protrudes in a V-shaped configuration from an inner peripheral end 6b continued to the outer peripheral surface 5a of the inner tube 5 to the pushing-in side P1. An outer peripheral end 6a of the annular coupling section 6 is disposed at the pushing-in side P1 over the inner peripheral end 6b and is continued to the larger thickness portion 9 of the outer tube 8.

A projecting direction of the V-shaped configuration of the annular coupling section 6 is opposite in direction to an extension of the slant wall section 11 of the outer tube 8, that is, the V-shaped configuration is directed to the pushing-in side P1.
An angle θ1 (theta one) of the V-shaped configuration of the annular connecting section 6 is set to be 40 to 70 (forty to seventy) degrees. In the first embodiment, the angle θ1 (theta one) is 60 (sixty) degrees. A length from the inner peripheral end 6b of the annular coupling section 6 to the outer peripheral end 6a is set to be 1.5 to 4 (one and a half to four) times of a radial distance between an inner peripheral surface of the inner tube 5 and an outer peripheral surface of the outer tube 8. In the first embodiment, the length is 2.5 (two and a half) times of the radial distance.

An opener cable and a feed water hose pass the grommet 1. Accordingly, as shown in Figure 1B, the annular coupling section 6 is not bent in the V-shaped configuration at two opposite positions in a diametrical direction of the section 6 to form flat surfaces 6e and 6f. The flat surfaces 6e and 6f are provided with through-apertures 31 and 32 through which the opener cable and feed water hose pass.

A thickness t3 (Figure 3) of the annular coupling section 6 is set to be substantially equal to or less than a thickness t4 (Figure 3) of the inner tube 5 so as to be deflectable. An angle θ2 (theta two) of the annular coupling section 6 that is slant coupled to the outer peripheral surface 5a of the inner tube 5 is set to be 20 to 30 (twenty to thirty) degrees. Thus, the inner tube 5 and outer tube 8 are not interconnected to each other directly in the radial direction but interconnected to each other through the V-shaped annular coupling section 6. Thus, when the inner tube 5 is deformed in connection with bending of the wire harness W/H, the annular coupling section 6 absorbs the deformation of the inner tube 5, so that the deformation of the inner tube 5 is not transmitted directly to the outer tube 8. This serves as a release portion.

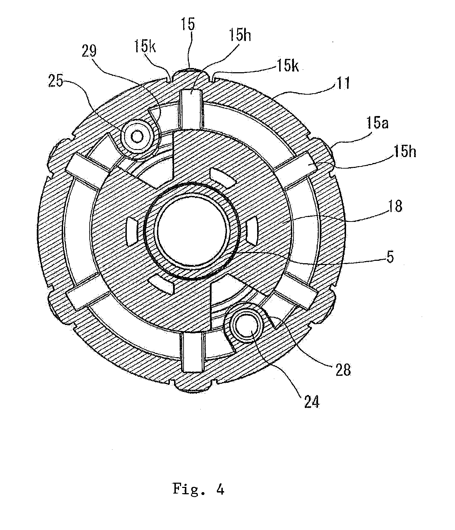

As shown in Figure 3, the annular coupling section 6 is provided on its inclined portion between the inner peripheral end 6b and a V-shaped projecting end 6c with a bent portion 6d that is bent toward the slant wall section 11. A pushing rib 18 having a larger thickness protrudes from the bent portion 6d toward the slant wall section 11. As shown in Figure 4, the pushing rib 18 is continuous in its peripheral direction but it is divided at positions corresponding to guide inner tubes 28 and 29 for permitting an opener cable and a feed water hose to pass.

A thickness t5 (Figure 3) of the pushing rib 18 is large enough to be 2 to 4 (two to four) times of the thickness t3 of the annular coupling section 6, is larger than the thickness t1 of the slant wall section 11, and is substantially the same as the thickness of the larger thickness portion 9.
The reason why the pushing rib 18 is a larger thickness is ascribable to the fact that, when the grommet 1 is inserted into the through-hole 3 in the vehicle body panel 2, a projecting end 18a of the pushing rib 18 contacts with the inner peripheral surface of the slant wall section 11 to permit the pushing force to be transmitted to the outer tube 8. When the grommet 1 is attached to the vehicle body panel 2, the projecting end 18a of the pushing rib 18 is disposed near the slant wall section 11 so that they can contact with each other. Thus, a sound-insulating space B (Figure 3) is defined among the pushing rib 18, the inner tube 5, the annular coupling section 6, and the outer tube 8.

As shown in Figure 3, the pushing rib 18 protrudes slightly slant in its outer diametrical direction. The projecting end 18a is opposed to the smaller diameter end of the slant wall section 11 continued to the drawing-out distal end side tubular portion 12. The drawing-out distal end side tubular portion 12 is provided with a stopper projection 12a, which protrudes inward from the slant wall section 11, at a side of the slant wall section 11 with which the pushing rib 18 contacts. Since the stopper projection 12a is provided on the drawing-out distal end side tubular portion 12, it is possible to prevent the projecting end 18a of the pushing rib 18 from slipping down into the drawing-out distal end side tubular portion 12 and to surely bring the pushing rib 18 into contact with the slant wall section 11 so as to transmit the pushing force to the slant wall section 11.

Furthermore, the slant wall section 11 is provided with an annular shallow recess in an inner surface from an outer diameter side, with which the projecting end 18a of the pushing rib 18 contacts, to the curved portion 11c. Thus, the slant wall section 11 is provided with a smaller thickness portion 19 (Figure 5) having a smaller thickness t6 (Figure 3). Since the slant wall section 11 is provided with the smaller thickness portion 19 from the curved portion 11c to the smaller diameter side, the smaller thickness portion 19 serves as a stress absorbing portion when the drawing-out distal end side tubular portion 12 is deformed on account of the bending of the wire harness. That is, a bending stress is concentrated in the smaller thickness portion 19, so that the drawing-out distal end side tubular portion 12 is hard to transmit its deformation to the vehicle body latch recess 10. The thickness t6 of the smaller thickness portion 19 is smaller than the thickness t3 of the annular coupling section 6.

As shown in Figure 3, the larger thickness portion 9 of the outer tube 8 protrudes slightly toward the pushing-in side P1 from the connecting part between the larger thickness portion 9 and an outer peripheral end 6a of the annular coupling section 6. A pushing-in side distal end surface 9a defines an orthogonal surface to an axis 0 of the inner tube 5. The annular vehicle body latch recess 10 is provided on a boundary area between the larger thickness portion 9 and the slant wall section 11. A distal end of a drawing-out side surface 10b that stands up from a bottom surface 10a of the vehicle body latch recess 10 is continued to a larger diameter end 11a of the slant wall section 11. A smaller diameter end 11b of the slant wall section 11 is continued to the drawing-out distal end side tubular portion 12. A curved portion 11c is provided between the larger diameter end 11a of the slant wall 11 and the smaller diameter end 11b so as to change an inclination angle of the outer peripheral surface of the slant wall section 11. An inclination angle at the smaller diameter end side with respect to the curved portion 11c is set to be large while an inclination angle at the larger diameter end side with respect to the curved portion 11c is set to be small.

The slant wall section 11 is provided on the outer peripheral surface that changes the inclination angle with axially stepped projecting ribs 15 that extend from the larger diameter end 11a of the distal end of the drawing-out side surface 10b on the vehicle body latch recess 10 to the smaller diameter end 11b and are spaced apart from one another in the peripheral direction. Since these projecting ribs 15 have the same widths in the peripheral direction, the projecting ribs 15 that extend radially from the smaller diameter end to the larger diameter end have narrow distances between the adjacent ribs 15 at the smaller diameter end side in the peripheral direction and wide distances between the adjacent ribs 15 at the larger diameter end side.

As shown in Figure 3, the inner peripheral surface of the outer tube 8 from the larger thickness portion 9 to the curved portion 11c of the slant wall section 11, that is, from the larger thickness portion 9 to a larger diameter side end 11e defines a parallel surface 11h in parallel to the axial direction 0. A thickness t1 of a portion 11d from the curved portion 11c to the drawing-out distal end side tubular portion 12 is set to be small. A thickness t2 of the drawing-out distal end side tubular portion 12 is set to be larger than the thickness t1.

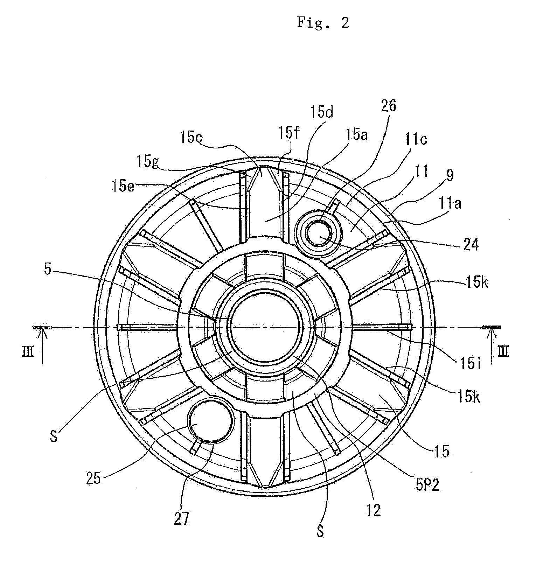

As shown in Figure 4, each projecting rib 15 that extends on the outer peripheral surface of the slant wall section 11 from the smaller diameter end of the slant wall section 11 to the larger diameter end is provided in an inner peripheral surface with a recess 15h that extends through a whole length of the projecting rib 15.
Further, as shown in Figures 1A and 1B, and Figure 2, the slant wall section 11 is provided with axial grooves 15k and 15i on an outer surface at proximal ends of each projecting rib 15 and on each central parts between the adjacent projecting ribs 15, thereby facilitating to deflect the slant wall section 11.

As shown in Figures 1A, each projecting rib 15 provided on its larger diameter side of the slant wall section 11 is provided with a slant surface 15c that inclines the top surface 15a of the projecting rib 15 downward to the drawing-out side surface 10b. Both side surfaces 15d and 15e of each projecting rib 15 at its distal end side across the slant surface 15c define slant surfaces 15f and 15g that approach to each other. That is, each projecting rib 15 is provided on its larger diameter end with the slant surfaces 15, 15f, and 15g that are cut at three sides. Thus, since the distal end surface of each projecting rib 15 is cut at the three sides to form round corners and to eliminate edges, the projecting ribs 15 are not caught by the peripheral edge around the through-hole 3 in the vehicle body panel 2 when the peripheral edge around the through-hole 3 drops down into the vehicle body latch recess 10.

As described above, the opener cable and feed water hose penetrate the grommet 1. As shown in Figure 2, the slant wall section 11 is provided with the through-apertures 24 and 25 so that the opener cable and feed water hose can pass the grommet 1. As described above, the annular coupling section 6 is provided with the through-apertures 31 and 32. Outer guide pipes 26 and 27 protrude outward from peripheral edges around the through-apertures 24 and 25. The outer guide pipes 26 and 27 are provided on their distal ends with closing end portions 26a and 27a. When using the outer guide pipes 26 and 27, the closing end portions 26a and 27a are cut away to open the outer guide pipes 26 and 27.

The smaller diameter inner tube 5, through which the wire harness W/H passes, protrudes from the opposite ends of the outer tube 8 in the longitudinal direction. The inner tube 5 is provided on an inner peripheral surface of each protruding end portion over the outer tube 8 with three waterproofing lips 33 (Figure 3).

As shown in Figure 5, since the through-hole 3 in the vehicle body panel 2 for receiving the grommet 1 is an aperture with a burr 3b that protrudes from the peripheral edge 3a around the through-hole 3 to the pushing-in side P1, the vehicle body latch recess 10 in the outer tube 8 has a configuration corresponding to the burr 3b.

A process for attaching the wire harness W/H to the grommet 1 is carried out by inserting the electrical wires in the wire harness W/H while enlarging the inner peripheral surface of the inner tube 5 by a jig (not shown). After inserting the wire harness W/H into the inner tube 5, the wire harness W/H drawn out from the opposite ends 5P1 and 5P2 of the inner tube 5 and the opposite ends 5P1 and 5P2 are secured to one another by winding adhesive tapes 40 around them.

Varying sizes in diameter of the wire harness W/H are absorbed in the annular coupling section 6, so that the outer tube 8 connected through the annular coupling section 6 to the inner tube 5 is hardly subject to affections caused by the varying sizes. Accordingly, it is possible to maintain the outer diameter of the outer tube in a designed size. That is, since the annular coupling section 6 has a smaller thickness enough to be deformed and is formed into the V-shape, the annular coupling section 6 can respond to the varying sizes in diameter merely by changing the bending angle. The inner tube extends continuously. Both of the pushing-in end 5P1 and drawing-out end 5P2 are formed into annular shapes and are not divided into half members. Accordingly, the inner diameter of the inner tube 5 increases or decreases to follow the varying sizes of the wire harness W/H, thereby closely contacting the inner peripheral surface of the inner tube 5 with the outer peripheral surface of the wire harness W/H. Consequently, it is possible to enhance a sealing function by preventing a water immersion clearance from being caused between the inner tube 5 and the wire harness W/H.

As shown in Figure 5, the grommet 1 mounted on the wire harness W/H is inserted into and attached to the through-hole 3 with the burr 3b in the vehicle body panel 2 that partitions a vehicle body into the engine room X and the passenger room Y.
A working process of inserting the grommet 1 into the through-hole 3 is carried out by inserting the drawing-out end 5P2 of the inner tube 5 into the through-hole 3 from the engine room X, and then pushing the grommet 1 into the through-hole 3 by a working person in the engine room X while holding the wire harness W/H with the grommet 1 by the working person. The grommet 1 is latched in the through-hole 3 by an one-motion operation in which a pushing-in action is effected at one time from the one side.

Specifically, since the portion 11d of the smaller diameter side of the slant wall section 11 of the outer tube 8 is smaller than the inner diameter of the through-hole 3, the grommet 1 can be readily inserted into the through-hole 3. When the curved portion 11c of the slant wall section 11 reaches the inner peripheral surface 3a of the through-hole 3, the stepped projecting ribs 15 of the slant wall section 11 contact with the inner peripheral surface 3a, thereby causing an inserting resistance. Then, the outer tube 8 cannot be further pushed into the through-hole 3 easily from the inner peripheral surface 3a.
However, if the working person holds and pushes the wire harness W/H to be drawn out from the pushing-in side P1 of the inner tube 5, the inner tube 5 that closely contacts with the wire harness W/H is advanced to the drawing-out side P2 in the drawing-out direction. The pushing rib 18 of the annular coupling section 6 connected to the inner tube 5 is also advanced to the inner surface of the slant wall section 11 of the outer tube 8 by the movement of the inner tube 5, and the projecting end 18a of the pushing rib 18 bumps onto the inner peripheral surface of the slant wall section 11. Thus, since the slant wall section 11 is pushed and moved forward by the pushing rib 18, the outer tube 8 with the slant wall section 11 passes through the through-hole 3 to the passenger room Y.

The pushing rib 18 presses the slant wall section 11 and the distal ends of the stepped projecting ribs 15 reach the inner peripheral surface 3a of the through-hole 3. Since each stepped projecting rib 15 is provided on the distal end with slant surfaces 15c, 15f, and 15g in three cut-away sides, the inner peripheral surface 3a of the through-hole 3 and the burr 3b fall down into the vehicle body latch recess 10 as if the stepped projecting ribs 15 fall down into the through-hole 3, and the grommet 1 can be secured to the vehicle body panel 2.

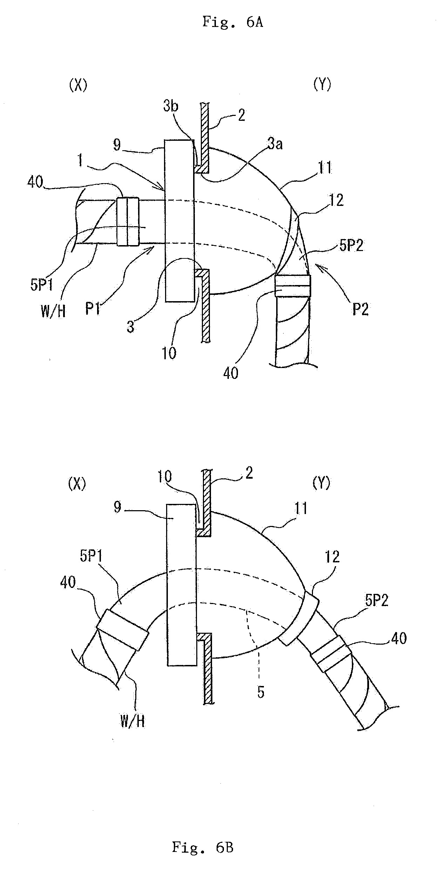

As described above, after the grommet 1 is secured to the vehicle body panel 2, as shown in Figure 6A, the wire harness W/H drawn out into the passenger room Y is sharply bent downward (or upward, rightward, or leftward) by an angle of 90 (ninety) degrees in many cases.
If the wire harness W/H is bent downward by the angle of 90 degrees, the wire harness W/H can closely contact with and pass through the inner tube 5, the inner tube 5 secured to the wire harness W/H by the adhesive tapes 40 follows the bending angle of the wire harness W/H, and the inner tube 5 is bent downward at the drawing-out end 5P2.

In this case, even if the drawing-out end 5P2 is bent downward in the grommet 1 of the present invention, the outer tube 8 is not coupled to the inner tube 5 at the drawing-out end 5P2 and the great clearance S exists between the drawing-out distal end side tubular portion 12 of the outer tube 8 and the inner tube 5. Thus, since the inner tube 5 is merely bent in the clearance S between the inner tube 5 and the outer tube 8, the outer tube 8 is not bent at the drawing-out side P2.
In the case where the wire harness W/H is bent sharply by the angle of 90 degrees or so at the pushing-in side P1, the inner tube 5 is greatly bent by the bending of the wire harness W/H, the bending will be transmitted through the annular coupling section 6 connected to the inner tube 5 to the outer tube 8. Even in this case, the V-shaped thin annular coupling section 6 will absorb the deformation of the inner tube 5.

On the other hand, as shown in Figure 6B, if the wire harness W/H is bent at the pushing-in side P1 in the engine room X, it is possible for the annular coupling section 6 to absorb the bending of the wire harness W/H, thereby surely holding the vehicle body latch recess 10 in the through-hole 3. Thus, it is possible to prevent the vehicle body latch recess 10 from floating up on account of the bending affection and to prevent the sealing function from being lowered.
Even in either case shown in Figure 6A or Figure 6B, since the annular coupling section 6 can absorb the bending of the inner tube 5, it is possible to maintain the vehicle body latch recess 10 in the circular state, to hold the whole periphery of the bottom surface of the vehicle body latch recess 10 in the inner peripheral surface of the through-hole 3 in a close contact manner, and to surely prevent water from entering the passenger room Y from the engine room X.

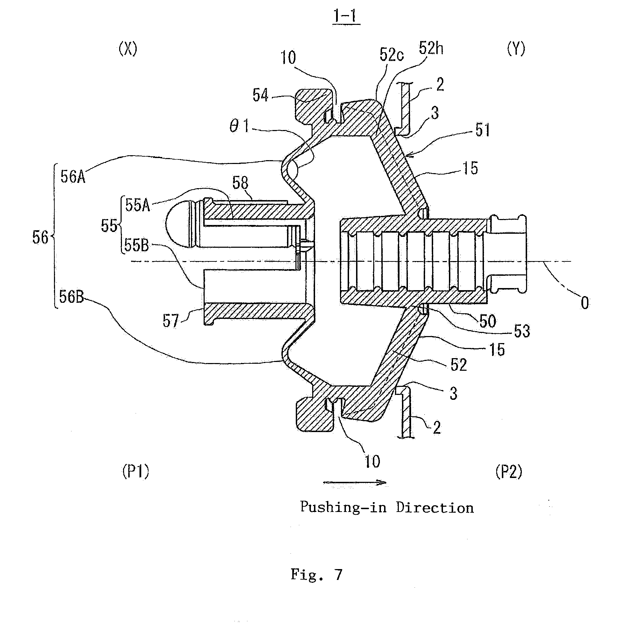

Figure 7 shows a second embodiment of a grommet 1-1 in accordance with the present invention.
The grommet 1-1 is a coupled type grommet in which a smaller diameter end of a slant wall section at a drawing-out side P2 is coupled to an inner tube, as is the case with the prior art grommet 100 shown in Figure 8A.
In the grommet 1-1 in the second embodiment, an inner tube is divided into a first inner tube member 50 at a grommet drawing-out side P2 and a second inner tube member 55 at a grommet pushing-in side P1. A smaller diameter end of a slant wall section 51 of an outer tube 8 is coupled through an annular coupling portion 53 to the first inner tube member 50 at the drawing-out side P2. The second inner tube member 55 at the pushing-in side P1 is coupled through a V-shaped annular coupling section 56 (56A and 56B) to a larger thickness portion 54 of the outer tube 8.

The annular coupling section 56 is divided in a diametrically direction into a pair of substantially half circular annular coupling parts 56A and 56B. These annular coupling parts 56A and 56B correspond to the annular coupling section 6 in the first embodiment. The annular coupling parts 56A and 56B have smaller thicknesses, as is the case with the annular coupling section 6, and bending angles θ1 (theta one).
An end of the second inner tube member 55 is provided with half circular grooves and half cylindrical portions 55A and 55B protrude from peripheral edges of the grooves to oppose to each other.
A guide pipe 58 for a feed water hose and a guide pipe for an opener cable (not shown) protrude from the annular coupling section 56.

Even if the wire harness is bent and the second inner tube member 55 in the grommet 1-1 constructed above is bent on account of the bending of the wire harness, since the annular coupling section 56 connected to the second inner tube member 55 is bent in the V-shape, the annular coupling section 56 can absorb the bending of the second inner tube member 55 by changing the bending shape of the annular coupling section 56. Accordingly, it is possible to prevent the bending of the second inner tube member 55 from being transmitted to the outer tube 8 provided with the vehicle body latch recess 10, thereby preventing the vehicle body latch recess 10 from being deformed and obtaining a good sealing function.

## Claims

1. A grommet that is mounted on a wire harness to be inserted into a through-hole in a vehicle body, is engaged with a vehicle body, and is made of an elastic material,
said grommet including:
an inner tube for passing electrical cables in said wire harness in a close contact manner;
an annular coupling section protruding an outer peripheral surface of said inner tube; and
an outer tube continued to an outer peripheral surface of said annular coupling section and disposed coaxially with said inner tube;
wherein said outer tube is adapted to couple said annular coupling section to a larger thickness portion of said outer tube and to couple a reducing diameter slant wall section to said larger thickness portion, and said outer tube is provided in an outer peripheral surface at a boundary area between said larger thickness portion and said slant wall section with a vehicle body latch recess in an annular manner; and
wherein said annular coupling section is formed into a smaller thickness, and said annular coupling section is bent in a V-shaped configuration from an inner peripheral end coupled to said outer peripheral surface of said inner tube to an outer peripheral end coupled to an inner peripheral surface of said outer tube.

2. A grommet according to Claim 1, wherein a projecting direction of said V-shaped configuration of said annular coupling section is opposite in direction to an extension of said slant wall section of said outer tube.

3. A grommet according to Claim 1 or 2, wherein an angle of said V-shaped configuration of said annular coupling section is set to be an angle of 40 to 70 (forty to seventy) degrees, a length of said annular coupling section is set to be 1.5 to 4 (one and a half to four) times of a radial distance between an inner peripheral surface of said inner tube and an outer peripheral surface of said outer tube, and a thickness of said annular coupling section is set to be less than thicknesses of said inner and outer tubes.

4. A grommet according to any one of Claims 1 to 3, wherein said annular coupling section protrudes from said outer peripheral surface of a longitudinal intermediate part between a pushing-in side and a drawing-out side of both ends of said inner tube, an inner peripheral surface at a smaller diameter inner tubular portion of said slant wall section of said outer tube continued to said annular coupling section is separated through a given clearance from said outer peripheral surface of said inner tube, and a drawing-out side of said smaller diameter inner tubular portion protrudes outward from said slant wall section.

5. A grommet according to Claim 4, wherein a pushing rib protrudes from said annular coupling section toward an inner surface of said slant wall section.

6. A grommet according to any one of Claims 1 to 3, wherein said inner tube is divided into a first inner tube member and a second inner tube member at a grommet drawing-out side and at a grommet pushing-in side, a smaller diameter end of said slant wall section of said outer tube is coupled to said first inner tube member at said drawing-out side, said second inner tube member at said pushing-in side is coupled through said annular coupling section to said outer tube, said annular coupling section is provided with diametrically divided ends, said second inner tube member protrudes from said divided ends, and said annular coupling section is bent in a V-shaped manner.
